Europäisches Patentamt

European Patent Office

Office européen des brevets

(19)

(11) Veröffentlichungsnummer : **0 644 015 A1**

(12) # EUROPÄISCHE PATENTANMELDUNG

(21) Anmeldenummer : **94810502.8**

(22) Anmeldetag : **01.09.94**

(51) Int. Cl.⁶ : **B23K 20/233**, B23K 33/00

(30) Priorität : **17.09.93 CH 2809/93**

(43) Veröffentlichungstag der Anmeldung :
**22.03.95 Patentblatt 95/12**

(84) Benannte Vertragsstaaten :
**AT BE CH DE DK ES FR GB GR IE IT LI NL SE**

(71) Anmelder : **Alusuisse-Lonza Services AG
Postfach 428
CH-8212 Neuhausen am Rheinfall (CH)**

(72) Erfinder : **Kampmann, Lutz
Vordergasse 75
CH-8213 Neunkirch (CH)**
Erfinder : **Gloor, Peter
Langrietstrasse 12
CH-8212 Neuhausen am Rheinfall (CH)**

(54) **Geschweisste Verbundplatten.**

(57) Verbindung zweier Elemente aus Aluminium oder Aluminiumlegierungen, wobei mindestens das eine Element eine Deckschicht als Teil eines Verbundwerkstoffes darstellt. Die Verbindung wird durch eine Schmelzschweissnaht zwischen mindestens einer äusseren Deckschicht des einen Elementes und dem zweiten Element gebildet. Die Erfindung ist besonders geeignet für die Herstellung komplexer, beliebig geformter, mechanisch stabiler und tragender Strukturen, die Verbundwerkstoffe enthalten. Die Erfindung betrifft auch das Verfahren für das Schmelzschweissen von Verbundwerkstoffen, wobei der Schweissnahtvorbereitung die entscheidende Bedeutung zukommt.

Fig. 1

EP 0 644 015 A1

Vorliegende Erfindung betrifft die Verbindung zweier Elemente aus Aluminium oder Aluminiumlegierungen, wobei mindestens das erste Element eine Deckschicht als Teil eines Verbundwerkstoffes, enthaltend einen wärmezersetzbaren Kern und wenigstens eine äussere Deckschicht, darstellt sowie ein Verfahren zum Herstellen solcher Verbindungen. Die Erfindung betrifft weiter die Verwendung des Verfahrens zur Herstellung komplexer, beliebig geformter, mechanisch stabiler und tragender Strukturen.

Der günstigen Materialeigenschaften wie geringes Gewicht, Korrosionsfestigkeit und der fast uneingeschränkten Formgebungsmöglichkeit wegen, werden Verbundwerkstoffe, wie beispielsweise 3 bis 200 mm dicke Sandwichplatten, bestehend beispielsweise aus zwei Deckschichten aus korrosionsfesten Aluminiumlegierungen und einem Kunststoffkern, immer häufiger in der Bauwirtschaft verwendet. So werden beispielsweise im Hochbau Verbundwerkstoffe als Fassadenverkleidungen eingesetzt oder Verbundwerkstoffe mit einem wärmedämmenden Kern aus Kunststoff, Mineralwatte, Schaumaluminium oder Schaumglas als tragende Fassadenelemente, Trennwände oder für Türfüllungen und Bedachungen verwendet. Solche leichten und doch steifen Bauelemente, die zwischen zwei Deckblättern aus hochfesten Aluminiumlegierungen einen Kern aus Aluminiumwaben, Balsaholz, Schaumaluminium oder Kunststoff haben, finden auch im Flugzeugbau und der Raumfahrt breite Anwendung.

Mit dem Begriff Verbundwerkstoff wird im vorliegenden Text stets ein mechanisch stabiler und tragender Werkstoff, enthaltend einen Kern und mindestens eine äussere Deckschicht, bezeichnet.

Metallene Konstruktionen können relativ einfach durch mechanische Bearbeitung oder wie im Falle von Aluminiumprofilen durch beispielsweise Strangpressen hergestellt und durch Fügen mittels Schrauben, Nieten, Schweissen oder Kleben zu komplexen Gebilden zusammengebaut werden. Die Herstellung von Verbundwerkstoffen geschieht dagegen meist in Form von Platten. Der Einsatz von Verbundwerkstoffen für komplexe Konstruktionen bedingt daher einen gegenüber metallenen Konstruktionen erhöhten Bedarf an Verbindungen.

Die Montage oder das Fügen verschiedener Konstruktionselemente aus Verbundwerkstoffen zu komplexen Verbundwerkstoffstrukturen geschah bis anhin im wesentlichen durch Verschrauben, Nieten, Kleben oder im Falle von Verbundwerkstoffen mit nicht brennbaren oder auch bei hohen Verarbeitungstemperaturen nicht zersetzbaren Kernmaterialien auch durch Schweissen.

Mechanische Befestigungsmittel wie Schrauben oder Nieten zum Fügen von Konstruktionselementen aus Verbundwerkstoffen beschränken jedoch, ihres Platzbedarfes wegen, die Konstruktionsmöglichkeiten für komplexe Strukturen und damit den Einsatz von Verbundwerkstoffen für solche Anwendungen.

Klebeverbindungen andererseits bedingen oft eine vorgängige spezielle Oberflächenbehandlung und zeigen häufig eine nur beschränkte Festigkeit oder bedingen eine recht grosse Klebefläche, was wiederum die Konstruktionsmöglichkeiten einschränkt.

Eine höhere Flexibilität in der Konstruktion von Verbundwerkstoffstrukturen erlaubt an und für sich das Fügen verschiedener Konstruktionselemente mittels Schweissen. Wegen den dabei auftretenden Prozesstemperaturen kommt diese Verbindungstechnik nur für Verbundwerkstoffe mit thermisch stabilen Kernmaterialien in Frage.

Das Schweissen von Verbundwerkstoffen mit thermisch weniger stabilen, d.h. wärmezersetzbaren Kernmaterialien, wie beispielsweise Kunststoffen, scheiterte bislang an der durch die hohen Prozesstemperaturen bewirkten Zerstörung bzw. Zersetzung des Kernmaterials. Durch das Zersetzen oder Verbrennen des Kernmaterials können während dem Schweissvorgang in unkontrollierbarer Weise Gase oder Dämpfe entweichen, die dann die Bildung einer gleichmässigen und porenfreien Schweissnaht verhindern. Damit wird jedoch eine mechanisch stabile und dauerhafte Verbindung verunmöglicht. Zudem bewirkt die Zersetzung des Kernmaterials im Bereiche der Schweissnaht eine entsprechende Schwächung der mechanischen Eigenschaften des Kerns und damit der ganzen Verbindung oder führt gelegentlich sogar zu einer wenigstens teilweisen Delamination der Deckschichten vom Kern.

Aufgabe vorliegender Erfindung ist es, die genannten Nachteile zu vermeiden und eine Verbindung zweier Elemente aus Aluminium oder Aluminiumlegierungen zu schaffen, wobei mindestens das eine Element eine Deckschicht als Teil eines Verbundwerkstoffes darstellt.

Erfindungsgemäss wird dies dadurch erreicht, dass die Verbindung eine Schmelzschweissnaht ist, die wenigstens teilweise zwischen mindestens einer äusseren Deckschicht eines ersten Elementes und einem zweiten Element angeordnet ist.

Die zu fügenden Elemente können aus Aluminium, Aluminiumlegierungen oder Legierungen auf Al-Basis bestehen und deren Oberflächen können mechanisch, physikalisch und/oder chemisch vorbehandelt sein. Für die Oberflächenbehandlung der zu fügenden Elemente eignen sich Verfahren wie beispielsweise Bürsten, Sandstrahlen, Walzen, Polieren, Gravieren, Aetzen, Feilen, Fräsen, Anodisieren, Lackieren, Beizen, Chromatieren, Phosphatieren, Galvanisieren, Dispersionsbeschichten, Emaillieren, Kaschieren oder thermisches Spritzen.

Der erfindungsgemässe Gegenstand kann eine Verbindung eines Profiles oder Bleches aus Aluminium oder Aluminiumlegierungen mit mindestens einer Deckschicht eines Verbundwerkstoffes betreffen. Das Profil oder Blech kann dabei entweder nur an eine Deckschicht des Verbundwerkstoffes gefügt sein, oder aber an die Stirnseite eines Verbundwerkstoffes, wobei in letzterem Fall eine oder beide Deckschichten des Verbundwerkstoffes mit dem Profil bzw. Blech verbunden sein können. Zudem kann das Profil oder Blech in beliebigem Winkel zur Deckfläche bzw. Stirnseite des Verbundwerkstoffes gefügt sein.

Der erfindungsgemässe Gegenstand kann jedoch auch eine Verbindung mindestens einer äusseren Deckschicht eines ersten Verbundwerkstoffes mit mindestens einer äusseren Deckschicht eines zweiten Verbundwerkstoffes oder zwischen Teilen ein und derselben Deckschicht eines Verbundwerkstoffes betreffen. Dabei können die miteinander verschweissten Deckschichten einen beliebigen Winkel zueinander einschliessen.

Die Verbindung der Deckschichten zweier Verbundwerkstoffe kann die stumpfe Verbindung der zu fügenden Elemente betreffen, d.h. die Kernmaterialien beider Verbundwerkstoffe sind gegeneinander gerichtet, oder aber die Verbindung des Kernmaterials des einen Elementes gegen die Deckschicht des anderen Elementes.

Bei erfindungsgemässen Verbindungen, insbesondere wenn sie Verbundwerkstoffe mit dicken Kernen enthalten, können zur Unterstützung und Verstärkung der erfindungsgemässen Verbindung die Stirnseiten der Verbundwerkstoffkerne zusätzlich geklebt sein.

Die Verbindung von Teilen ein und derselben Deckschicht eines Verbundwerkstoffes kann beispielsweise die Fixierung eines gebogenen Verbundwerkstoffes betreffen, dessen Deckschicht zum Zwecke des besser durchführbaren Biegevorganges auf der Biegungsinnenseite des Verbundwerkstoffes, beispielsweise quer zur Biegerichtung, aufgetrennt wurde.

Die erfindungsgemässe Verbindung weist immer eine Schmelzschweissnaht zwischen zwei Elementen aus Aluminium oder Aluminiumlegierungen auf, d.h. bezüglich der Verbundwerkstoffe müssen mindestens die zu verbindenden Deckschichten aus Aluminium oder Aluminiumlegierungen bestehen.

Verbundwerkstoffe können faserverstärkte High-Tech-Materialien mit kompliziertem Schichtaufbau, aber auch einfach aufgebaute und preisgünstige Verbundprodukte in Form von Sandwichplatten sein.

Sandwichplatten weisen im allgemeinen einen einfachen flächigen Schichtaufbau auf und werden üblicherweise in Form von Verbundplatten aus einem meist symmetrisch aufgebauten Laminat, enthaltend eine Kernschicht und zwei äussere Aluminiumbleche, hergestellt. Dabei bestimmen im wesentlichen die Aluminium-Deckschichten die mechanischen Eigenschaften, wie beispielsweise die Biegesteifigkeit, während die Hauptaufgabe der Kernschicht darin besteht, die beiden Deckschichten auf einem definierten Abstand zu halten. Neben diesem Grundaufbau können solche einfachen Laminate noch weitere Schichten, wie beispielsweise Klebefolien oder Lackschichten enthalten, so dass ein handelsübliches Laminat durchaus 7 oder mehr Schichten aufweisen kann.

Die Eigenschaften solcher Laminate sind beispielsweise niedriges Raumgewicht, hohe Biegesteifigkeit, gute Dämpfungseigenschaften, hohe elektrische Durchschlagfestigkeit, einfache Verarbeitbarkeit, hervorrragende Planheit, nahezu beliebige Oberflächenbeschaffenheit und gute Langzeitbeständigkeit.

Die Anwendungsmöglichkeiten von Verbundplatten oder Verbundhalbzeug in Form von Laminaten sind damit sehr vielseitig; sie reichen von geformten Fassadenelementen über Dachrand-, Tunnel-, Wand- und Deckenverkleidungen bis hin zu wetterfesten Tischtennisplatten, Messeständen und Fahrzeugaufbauten.

Die erfindungsgemässe Verbindung basiert auf der Schmelzschweissung von mindestens einer äusseren Deckschicht eines Verbundwerkstoffes mit einem zweiten Element, wobei für die zu schweissenden Materialien alle handelsüblichen Werkstoffe aus Aluminium oder Aluminiumlegierungen eingesetzt werden können.

Die Reinheit des Aluminiums resp. die Zusammensetzung der Aluminiumlegierungen ist für die erfindungsgemässe Verbindung unkritisch. In der Praxis haben sich Aluminium einer Reinheit von beispielsweise 98,3 % und höher oder Legierungen auf Al-Basis mit und ohne Dispersionshärtung bewährt. Bevorzugt werden Guss-, Walz-, Knet- und Schmiedelegierungen aus Aluminium. Die Dicke der Deckschichten kann dabei zwischen 0,2 und 5 mm betragen. In der Praxis haben sich Deckschichtdicken zwischen 0,3 und 3 mm und insbesondere zwischen 0,3 und 1,5 mm bewährt.

Die für die erfindungsgemässe Verbindung von Verbundwerkstoffen in Frage kommenden wärmezersetzbaren Kernmaterialien sind unkritisch. Die eingesetzten Verbundwerkstoffe können beispielsweise Kerne aus Thermoplasten, Elastomeren oder Duroplasten enthalten, wobei Kerne aus Thermoplasten oder Duroplasten bevorzugt eingesetzt werden.

Die Kerne können auch, zumindest teilweise, nicht wärmezersetzbare Kerne oder Kernmaterialien enthalten.

Die Kernmaterialien können gewebe- oder faserverstärkt sein und/oder Strukturstoffe, wie beispielsweise eine Wabenstruktur, enthalten. Besonders bevorzugte Verbundwerkstoffe weisen einen Kern enthaltend Polyolefine, wie Polyethylene (PE) oder Polypropylene (PP), geschäumtes Polyvinylchlorid (PVC), geschäumtes Polyurethan, geschäumte Polystyrol-Kugeln mit Epoxidharz als Bindemittel oder polyesterhaltige Schäume auf. Die Kerne können zusätzlich auch kleinere oder grössere Mengen an Zusatzstoffen, wie organische oder anorganische Füllstoffe, beispielsweise Pigmente oder mineralische Füllstoffe, enthalten. Gegebenenfalls können die Kerne auch wabenförmige Gebilde aus Aluminium oder anderen Werkstoffen enthalten.

Die Kernmaterialien können mit den Deckschichten wärmegefügt oder verklebt sein. Zudem kann der Kern aus mehreren wärmegefügten oder verklebten Kernschichten bestehen.

Die Dicke der Kernschicht kann 1 bis 300 mm betragen, wobei eine Schichtdicke zwischen 2 und 200 mm bevorzugt wird.

Bei einer bevorzugten Ausführungsform der erfindungsgemässen Verbindung weist die Schmelzschweissnaht keinen direkten Kontakt mit dem Kernmaterial auf. Um diesen Zwischenraum mittels einer Ausnehmung im Kernmaterial sicherzustellen, beträgt der Abstand der Schmelzschweissnaht zum Kernmaterial für den erfindungsgemässen Gegenstand bevorzugt 0,5 bis 5 mm und insbesondere zwischen 1 und 3 mm.

Die durch diese Ausnehmung geschaffene Oberfläche des Kernmaterials schliesst in einer besonders bevorzugten Ausführungsform mit der dadurch hinterschnittenen Deckfläche einen spitzen Winkel zwischen 45 und 60° ein.

Die durch die Ausnehmungen verbleibenden Verbindungsflächen, die zudem nicht verschweisst sind, können gegebenenfalls auch verklebt sein. Dies kann beispielsweise beim stumpfen Fügen zweier Verbundwerkstoffe die durch die Ausnehmungen geschaffenen Stirnflächenabschnitte der Kerne betreffen oder, im Falle einer beispielsweise rechwinkligen Verbindung zweier Verbundwerkstoffe, die Fläche zwischen dem durch die Ausnehmungen geschaffene Deckflächenabschnitt des einen Verbundwerkstoffes und der verbleibenden Stirnfläche des anderen Verbundwerkstoffes.

Die an einer erfindungsgemässen Verbindung beteiligten Stirnseiten der Kernschichten von Verbundwerkstoffen können zumindest teilweise mit den ihnen gegenüberliegenden Flächen des zweiten Verbindungselementes zusammenstossen oder aber sich in einem geringen Abstand von beispielsweise weniger als 3 mm zueinander befinden. Die mechanischen Eigenschaften der Verbindung hängen unter anderem von diesem Abstand ab: Je grösser der Abstand, desto elastischer wird die entsprechende Verbindung. Besteht kein direkter mechanischer Kontakt der an der Verbindung beteiligten Stirnseiten der Kernschichten mit den ihnen gegenüberliegenden zweiten Verbindungselementen, geschieht die Übertragung mechanischer Kräfte im wesentlichen über die miteinander verbundenen metallischen Schichten. Wenn hingegen die Stirnseite der Kernschicht eines mit einem zweiten Element gefügten Verbundwerkstoffes zusammenstösst, werden die mechanischen Kräfte auch über die beteiligten Kernschichten übertragen, und die Verbindung wird damit entsprechend steifer. Dasselbe Verhalten zeigt sich sinngemäss auch bezüglich der Wärmekopplung erfindungsgemäss verbundener Elemente oder betreffend der Übertragung elektrischer Grössen. Die physikalischen Eigenschaften der erfindungsgemässen Verbindung können somit durch dessen Ausgestaltung beeinflusst werden.

Bezüglich des Verfahrens wird die gestellte Aufgabe erfindungsgemäss dadurch gelöst, dass die Verbindung mittels Schmelzschweissen mindestens einer Deckschicht des Verbundwerkstoffes des einen Elementes mit dem anderen Element geschieht.

Beim Schweissen von Verbundwerkstoffen können, beispielsweise aus dem Klebstoff der Verbundwerkstoffe oder als Zersetzungsprodukte des Kernmaterials, in unkontrollierbarer Weise Gase und Dämpfe entweichen. Um eine poren- und rissfreie Schweissnaht hoher Festigkeit zu erhalten, wird gemäss vorliegender Erfindung das Kernmaterial im Bereich der zu verschweissenden Stellen vor dem Schweissen bevorzugt derart entfernt, dass eine Ausnehmung entsteht und ein Abstand der zu verschweissenden Stellen zum Kernmaterial von 0,5 bis 5 mm, und insbesondere von 1 bis 3 mm, resultiert. Die dabei gebildete Hinterschneidung der Deckfläche resultiert in frei hängenden Enden der betreffenden Deckschicht einer Länge zwischen 0,5 und 5 mm. Zudem bildet die durch die Ausnehmung entstandene Fläche des Kernmaterials mit der hinterschnittenen Deckfläche einen spitzen Winkel zwischen 45 und 60°. Die erfindungsgemässe Lösung gewährleistet somit, dass während dem Füge- oder Schweissprozess keine oder weniger Gase und Dämpfe durch Zersetzung des Kernmaterials gebildet werden, die allenfalls gebildeten Gase und Dämpfe möglichst ungehindert entweichen können und verhindert damit, dass das während dem Schweissprozess aufgeschmolzene Metall durch den Gasdruck herausgeschleudert wird, was zu einer porösen Schweissnaht oder gar zu Löchern und Rissen in der Naht führen könnte.

In einer bevorzugten Ausführungsform des erfindungsgemässen Verfahrens werden die zu verbindenden Flächen in einem Abstand von 0 bis 3 mm zueinander angeordnet und dann miteinander verschweisst.

Das erfindungsgemässe Verfahren lässt sich auch zum mechanisch stabilen Fixieren von gebogenen Verbundwerkstoffen anwenden. Dazu wird beispielsweise vor dem Biegevorgang die Deckschicht an der Biegungsinnenseite quer zur Biegerichtung aufgetrennt, die erfindungsgemässe Schweissnahtvorbereitung in Form einer Ausnehmung unterhalb der aufgetrennten Deckfläche ausgeführt und der Verbundwerkstoff gebogen, wobei zur mechanischen Fixierung des nun gebogenen Verbundwerkstoffes die zuvor aufgetrennte Deckfläche wieder verschweisst wird.

Für das erfindungsgemässe Verfahren kann das Schmelzschweissen mittels Laser angewendet werden. Dabei wird dem Werkstoff mittels hochenergetischem Licht die benötigte Schweissenergie zugeführt.

Beim Laserschweissen von Aluminium oder Aluminiumlegierungen ist zu berücksichtigen, dass nur ein kleiner Teil der eingestrahlten Energie von der Oberfläche absorbiert wird: Bei $CO_2$-Lasern liegt der Anteil der absorbierten Energie bei typischerweise 2 % der eingestrahlten Energie. Diese Eigenschaft von Aluminiumoberflächen bedingt für dessen Verschweissen Laser mit recht hoher Leistungsdichte und reduziert die Einsatzmöglichkeit des Laserschweissverfahrens auf Werkstoffdickenbereiche zwischen typischerweise 0,3 und 6 mm.

Um die geforderte Leistungsdichte für den Schweissprozess zu erreichen, können als Energiequellen insbesondere Festkörper- oder Moleküllaser verwendet werden. Besonders geeignet sind Festkörperlaser, wie die Neodym: YAG-Laser oder Moleküllaser, wie beispielsweise der $CO_2$-Laser.

Der für die Materialbearbeitung wichtigste Moleküllaser ist der $CO_2$-Laser, der über 100 Wellenlängen im Bereich 9,14 µm bis 11,01 µm mit einer Maximalintensität bei 10,6 µm aufweist. Er zeichnet sich durch einen hohen Wirkungsgrad und eine hohe Ausgangsleistung im kontinuierlichen Betrieb ab. Für das erfindungsgemässe Verfahren eignet sich zweckmässigerweise ein $CO_2$-Laser einer Leistungsstärke zwischen 2 und 15 kW.

Der für technische Anwendungen wichtigste Festkörperlaser ist der Nd (Neodym): YAG-Laser. YAG ist die Abkürzung für Yttrium-Aluminium-Granat ($Y_3Al_5O_{12}$). Der leistungsstärkste Laserübergang eines Nd: YAG-Lasers liegt bei der Wellenlänge $\lambda$ = 1,064 µm. Ein wesentlicher Vorteil von Nd: YAG-Lasern gegenüber $CO_2$-Lasern liegt in der durch die kürzere Lichtwellenlänge bedingten Möglichkeit der Strahlführung des YAG-Lasers mittels Glasfasern sowie in der verbesserten Absorption bei der Behandlung von Aluminiumlegierungen. Für das erfindungsgemässe Verfahren eignen sich zweckmässigerweise Nd: YAG-Laser mit einer Leistungsstärke zwischen 0,5 und 3 kW und insbesondere von 1 bis 1,4 kW.

Das erfindungsgemässe Laserschweissverfahren kann mit oder ohne Zugabe einer Schweisslegierung in Form beispielsweise eines Zusatzdrahtes durchgeführt werden.

Solche Schweisslegierungen dienen im wesentlichen als Füllmatrial um bei grösseren Spalten zwischen den zu verschweissenden Flächen ein Einfallen der Naht zu verhindern.

Die Wahl der Schweisslegierungen richtet sich nach der Zusammensetzung der zu verschweissenden Materialien sowie auch nach den von der Schweissverbindung verlangten Eigenschaften. Für die erfindungsgemässen Schweissverfahren besonders geeignete Schweisslegierungen sind Zusatzmetalle wie in Tabelle 1 aufgeführt.

Tabelle 1:

| Gattung | Werkstoffbezeichnung | |
|---------|---------------------|---|
| | DIN 1732 | AA* |
| Al99.5 | S-Al99.5 | 1050 A |
| AlMg3 | S-AlMg3 | ~5554/5654 |
| AlMg4.5Mn | S-AlMg4.5Mn | 5183 |
| AlMg5 | S-AlMg5 | 5356 |
| AlSi5 | S-AlSi5 | 4043 A |
| AlSi12 | S-AlSi12 | 4047 A |

\* Internationales Legierungsregister

Um die Aufschmelzung des Zusatzdrahtes zu garantieren, muss beim Laserschweissen der verwendete Drahtdurchmesser gleich oder kleiner als der Durchmesser des fokussierten Laserstrahls sein. Die Zuführgeschwindigkeit des Drahtes hängt von der Schweissgeschwindigkeit, der Schweisstiefe und der Spaltbreite ab.

Um die während dem Schweissvorgang dem Werkstoff zuzuführende Wärmeenergie möglichst gering zu halten, kann der Zusatzdraht zudem induktiv vorgeheizt werden.

Für das erfindungsgemässe Laserschweissverfahren mittels einem $CO_2$-Laser werden bevorzugt Zusatzdrähte von 1,0 mm Durchmesser mit einer Vorschubgeschwindigkeit von 0,8 - 1,2 m/min bei einem Strahldurchmesser zwischen 0,9 und 1,2 mm verwendet. Die erreichbare Schweissgeschwindigkeit liegt dabei zwischen 1,3 und 2,4 m/min. Ohne Zusatzdraht beträgt die Schweissgeschwindigkeit typischerweise zwischen 0,9 und 1 m/min. Bei Verwendung eines gepulsten Nd:YAG-Lasers liegt die Pulsfrequenz typischerweise bei 30 Hz. Die Schutzgasatmosphäre besteht beim Laserschweissen bevorzugt aus einem Gemisch He/Ar, wobei typischerweise eine Menge von 8 - 12 l des entsprechenden Inertgasgemisches zugeführt werden. Die Inertgasatmosphäre kann jedoch auch bis zu 1 Vol.-% $N_2$ enthalten, wobei Werte um 0,5 Vol.-% $N_2$ bevorzugt werden.

Eine weitere Ausführungsform des erfindungsgemässen Verfahrens besteht in der Anwendung eines geschwindigkeitsoptimierten Impulsschweissverfahrens. Prinzipiell eignen sich Schweissverfahren, wie das Wolfram-Inert-Gas-Schweissen, abgekürzt TIG (TIG steht dabei für Tungsten-Inert-Gas) oder das Metall-Inert-Gas-Schweissen, abgekürzt MIG.

Beim Metall-Inertgasschweissen (MIG) brennt der Lichtbogen in einer inerten Schutzgasatmosphäre zwischen einer abbrennenden Drahtelektrode und dem zu verschweissenden Werkstück. Eine hohe Stromdichte ermöglicht dabei eine hohe Schweissgeschwindigkeit, bewirkt jedoch auch eine grosse Abschmelzgeschwindigkeit der Drahtelektrode.

Beim Wolfram-Inertgasschweissen (TIG) brennt der Lichtbogen in einer inerten Schutzgasatmosphäre zwischen einer nicht abschmelzenden Wolframelektrode und dem zu verschweissenden Werkstück. Die Wolframelektrode dient dabei lediglich zur Stromführung während des Schweissprozesses.

Das TIG- wie das MIG-Schweissen gehören zu den Schutzgasschweissverfahren. Dabei befinden sich während dem Schweissvorgang die Elektrode, der Lichtbogen und die Schweissstelle unter einer Schutzgashülle aus Inertgas, wie beispielsweise Argon, Helium oder Gemische davon. In Sonderfällen, wie beispielsweise beim Schweissen dicker Platten, kann auch ein Gemisch von inerten Gasen mit beispielsweise Stickstoff oder Sauerstoff verwendet werden.

Die bei Aluminium oder Aluminiumlegierungen häufig vorhandene oberflächlich fest verankerte und stabile Oxidschicht mit hohem Schmelzpunkt (über 2000 °C) muss zur Erreichung einer guten Schweissnahtqualität vor oder während dem Schweissvorgang entfernt werden. Bei den Schutzgasschweissverfahren geschieht dies üblicherweise durch den Reinigungseffekt des ionisierten Schutzgases zusammen mit der Wirkung der vom Werkstück zur Elektrode fliessenden Elektronen.

Beim konventionellen MIG-Verfahren wird mit Gleichstrom und positiv gepolter Elektrode gearbeitet, beim konventionellen TIG-Schweissen mit Wechselstrom oder mit Gleichstrom bei negativ gepolter Elektrode.

Das konventionelle MIG-Schweissen wird vorwiegend für Werkstücke von 3 - 50 mm Dicke, das konventionelle TIG-Schweissen für solche mit 0,5 bis 10 mm Dicke gewählt. Im allgemeinen ist beim MIG-Verfahren, im Vergleich zum TIG-Verfahren, eine zwei- bis dreifache Schweissgeschwindigkeit erreichbar.

Beim MIG- und TIG-Verfahren können die Elektroden mit Gleichstrom oder Wechselstrom von beliebiger Form betrieben werden. Beim Schweissen mit Gleichstrom kann die Elektrode entweder negativ oder positiv gepolt werden. Eine negativ gepolte Elektrode emittiert Elektronen, die beim Aufprall auf das als Anode geschaltete Werkstück ihre kinetische Energie in Wärme umsetzen. Diese verteilt sich zu etwa 2/3 im Werkstück und zu 1/3 an der Elektrode.

Eine negativ gepolte Elektrode ist aber normalerweise sowohl für das TIG- als auch das MIG-Schweissen von Aluminium ungeeignet, weil dabei kein Reinigungseffekt entsteht. Eine Ausnahme bildet das TIG-Gleichstrom-Helium-Minuspol-Schweissen von Aluminium. Hierbei wird durch grosse Wärmekonzentration im Werkstück die Oxidhaut zwar nicht entfernt, doch so zerstört, dass eine gute Schweissverbindung entstehen kann.

Bei positiv gepolten Elektroden fliessen die Elektronen vom Schmelzbad zur Elektrode. Die Wärmmenge verteilt sich deshalb etwa in umgekehrtem Verhältnis zu jener bei negativ gepolten Elektroden. Zudem wird beim Schweissen mit positiver Polung der Elektroden, durch gemeinsames Einwirken von Elektronenstrom und positiv geladenen Schutzgasionen, die Oxidhaut an der Schweissstelle entfernt.

Mit dem Schutzgas wird ein Luftzutritt zum Schmelzbad verhindert. Das inerte Gas bewirkt ausserdem eine Stabilisierung des Lichtbogens. Für Aluminium und Aluminiumlegierungen haben sich einatomige Edelgase, wie Argon, Helium oder Gemischen davon, bewährt.

Die bei Gleichstrom durch die Polarität gegebenen unterschiedlichen Bedingungen lassen sich bei Wechselstrom auf einfache Weise miteinander vereinen. Besondere Beachtung ist jedoch beim normalen Wechselstromverfahren wegen der verhältnismässig hohen Wärmeeinbringung dem Verzugsproblem zu schenken. Dem Verzug kann durch die Wahl einer rechteckigen Wellenform und elektronischer Beeinflussung des Lichtbogens entgegengewirkt werden.

Trotz des gegenüber Stahl bedeutend niedrigeren Schmelzpunktes (630 - 660°C) verlangt das Schweissen von Aluminium wegen der hohen Wärmeleitfähigkeit und Schmelzwärme des Metalls etwa die gleiche Wärmemenge, wie sie für Stahl erforderlich ist.

Die Schwindung des Aluminiums beim Erstarren und die grosse Wärmeausdehnung führen beim Erwärmen bzw. beim Abkühlen zu Formänderungen, die unter Umständen Schweissrisse, Verzug und Eigenspannungen hervorrufen können. Dem wirken der niedrige Elastizitätsmodul und die geringeren Schweisstemperaturen entgegen. Der Verzug ist stark verfahrensabhängig und bei Schweissmethoden mit geringer Wärmeeinbringung kleiner als bei jenen mit grosser Wärmeeinbringung.

Beim erfindungsgemässen Schmelzschweissverfahren kommt noch ein weiterer Grund für die Erfordernis möglichst kleiner Wärmeeinbringung auf das Substrat hinzu: Da die zu fügenden Verbundwerkstoffe u.a. Kunststoffkerne und Klebstoffe enthalten können, die teilweise thermisch nur wenig stabil sind, muss die Prozesstemperatur während dem Schweissen möglichst tief gehalten werden.

Erfindungsgemäss wird diese Forderung bevorzugt dadurch erfüllt, dass das Schmelzschweissen mittels einem TIG- oder MIG-Impulsschweissverfahren durchgeführt wird.

Bei den Impulsschweissverfahren werden dem Grundstrom Impulse von meist rechteckförmiger Wellenform überlagert, deren Impulsfrequenz, Impulsbreite und Impulshöhe getrennt voneinander eingestellt werden können. Damit kann die Wärmeeinbringung auf den zu verschweissenden Werkstoff optimal auf die unterschiedlichen Werkstoffkombinationen wie etwa Profil/Verbundwerkstoff oder Verbundwerkstoff/Verbundwerkstoff angepasst werden.

Wie bei jedem Schweissverfahren will man beim erfindungsgemässen Verfahren optimale Qualität der Schweissnaht bei einer maximalen Schweissgeschwindigkeit erreichen. Durch Vorversuche können diese optimalen Schweissparameter einfach bestimmt werden, wobei dann von einem geschwindigkeitsoptimierten MIG- bzw. TIG-Impulsschweissverfahren gesprochen wird.

Die erfindungsgemässen Schweissverfahren können mit oder ohne Zugabe einer Schweisslegierung (siehe Tabelle 1) durchgeführt werden. Diese werden üblicherweise in Form von Schweissdrähten mit einem Druchmesser von 0,8, 1,0, 1,2, 1,6 oder 2,4 mm zugeführt, wobei für die TIG- bzw. MIG-Impulsschweissverfahren ein Durchmesser von 1,2 mm besonders bevorzugt wird. Der Zusatzdraht kann zudem induktiv vorgeheizt werden.

Bei Anwendung des TIG-Impulsschweissverfahrens wird bevorzugt eine Schutzgasatmosphäre aus Argon oder einem Gemisch aus Argon/Helium verwendet, wobei auch kleine Mengen Sauerstoff von bis zu 2 Vol.-% zugemischt werden können. Ein typischer Wert für die zugeführte Gasmenge liegt bei 8 l/min Ar oder Ar/He, eventuell mit 1 Vol.-% $O_2$. Damit ist mit einem schmalen Lichtbogen eine ausgezeichnete Tiefenwirkung, eine schmale Wärmeeinflusszone und eine geringe Belastung der Wolframelektrode erreichbar.

Ein breiter Lichtbogen, ohne Tiefenwirkung, eignet sich jedoch besonders zum Verbinden dünner Werkstücke. Das TIG-Impulsschweissverfahren eignet sich für manuelles oder mechanisiertes Schweissen von Werkstücken einer Dicke zwischen 0,5 bis 6 mm.

Typische Werte für die Durchführung des erfindungsgemässen TIG-Verfahrens liegen für die Pulsfrequenz bei 500 Hz, für den Schweissstrom bei 80 - 120 A, für die Vorschubgeschwindigkeit eines möglicherweise eingesetzten Zusatzdrahtes bei 1,2 - 1,5 m/min und für die erreichte Schweissgeschwindigkeit bei 0,4 bis 0,8 m/min.

Bei Anwendung des MIG-Impulsschweissens für das erfindungsgemässe Schmelzschweissverfahren wird bevorzugt eine Schutzgasatmosphäre aus Argon oder Argon/Helium-Gemisch verwendet, möglicherweise mit einem geringen Anteil von weniger als 2 Vol.-% $O_2$. Mit diesem Verfahren können besonders Werkstücke mit Wanddicken von über 1,5 mm verschweisst werden.

Die möglichen Anwendungen des erfindungsgemässen Schweissverfahrens werden beispielhaft anhand der Figuren 1 bis 4 näher erläutert.

Figur 1 zeigt einen Querschnitt durch eine erfindungsgemässe Verbindung eines Bleches mit der Deckschicht eines Verbundwerkstoffes.

Figur 2 zeigt einen Querschnitt durch zwei Verbundwerkstoffe, die in einem rechten Winkel zueinander gefügt wurden.

Figur 3 zeigt schematisch das stumpfe Fügen zweier Verbundwerkstoffe.

Figur 4 zeigt das Prinzip der Fixierung eines gebogenen Verbundwerkstoffes.

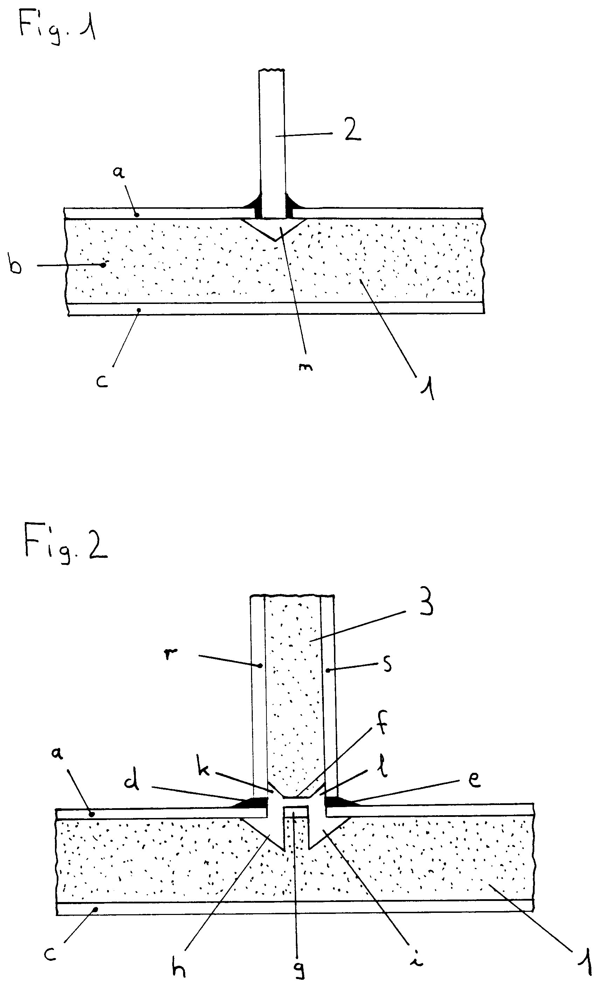

In Figur 1 ist die Verbindung eines Verbundwerkstoffes 1, enthaltend einen Kern b und zwei Deckschichten a bzw. c, mit einem Blech 2 dargestellt. Die erfindungsgemässe Schweissnahtvorbereitung in Form einer Ausnehmung m des Kernmaterials b ist ebenfalls eingezeichnet.

Figur 2 zeigt die rechtwinklige Verbindung zweier Verbundwerkstoffe 1 und 3 durch Verschweissen der beiden Deckschichten des Elementes 3 mit der Deckschicht a des Elementes 1. Die Ausnehmungen h und i bzw. k und l des Kernmaterials der Verbundwerkstoffe 1 bwz. 3 befinden sich im Bereich der Schweissnähte d und e. Der durch die Ausnehmungen h und i geschaffene Deckflächenabschnitt g des Verbundwerkstoffes 1 kann mit der durch die Ausnehmungen k und l verbleibenden Stirnfläche des Kernmaterials des Verbundwerkstoffes 3 wenigstens teilweise zusammenstossen oder verklebt sein.

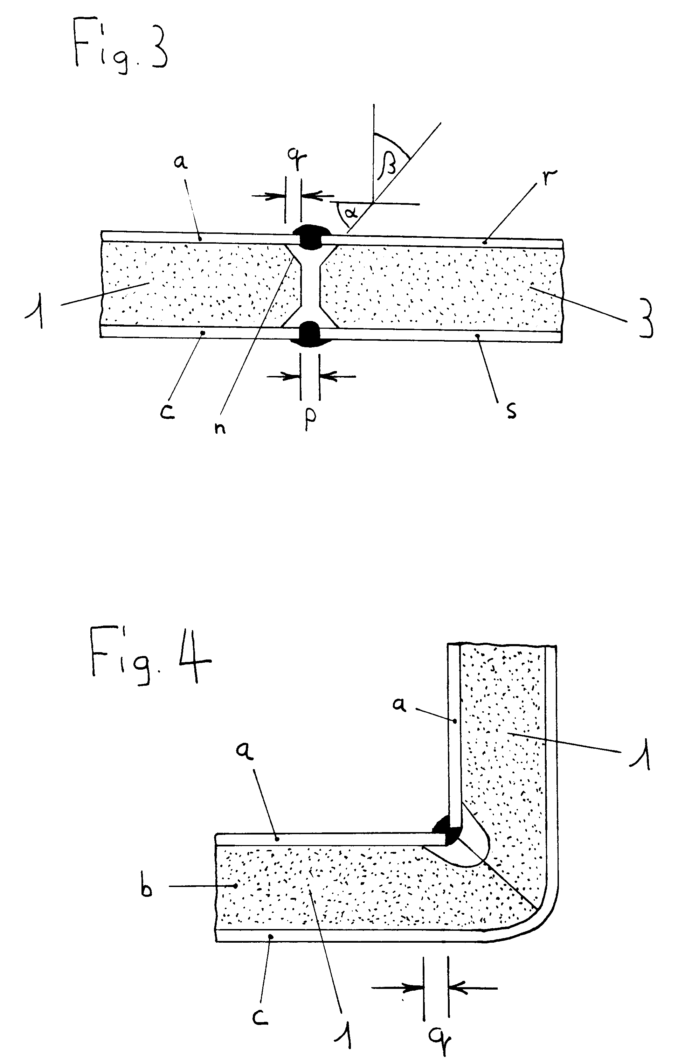

Figur 3 zeigt eine schematische Skizze der Anordnung zweier Verbundwerkstoffe 1 und 3 für das stumpfe Fügen. Dazu werden die zu verschweissenden Flächen a,r bwz. c,s vor dem Schweissprozess in einem Abstand p von 0 bis 3 mm zueinander angeordnet. Im weiteren ist die entsprechende Schweissnahtvorbereitung in Form der Ausnehmungen der Kernmaterialien gezeigt. Dabei wird das Kernmaterial der Verbundwerkstoffe 1 und 3 unterhalb der zu verschweissenden Stellen soweit entfernt, dass ein Abstand q der zu verschweissenden Stellen zum Kernmaterial von 0,5 bis 5 mm resultiert. Zudem ist der spitze Winkel $\alpha$ zwischen der durch die Ausnehmung entstehende Fläche n des Kernmaterials mit der Deckfläche von 45 bis 60° ersichtlich, wobei in der Zeichnung auch der entsprechende Winkel $\beta$ zwischen der Fläche n und der Senkrechten auf die Deckfläche eingezeichnet ist. Sinngemäss ergänzen sich die beiden Winkel $\alpha$ und $\beta$ zu einem rechten Winkel, so dass der Winkel $\beta$ zwischen 30 und 45° beträgt.

In Figur 4 ist das Prinzip der Fixierung eines gebogenen Verbundwerkstoffes 1 gezeigt. Dazu wird vor dem Biegevorgang die Deckschicht a an der Biegungsinnenseite quer zur Biegerichtung aufgetrennt und das Kernmaterial beidseits der Trennlinie t derart entfernt, dass ein Abstand q der zu verschweissenden Stellen der Deckschicht a zum Kernmaterial b von 0,5 - 5 mm entsteht. Nach dem Biegevorgang werden die freigelegten Deckschichtenden miteinander verschweisst, um dem nun gebogenen Verbundwerkstoff entsprechende mechanische Festigkeit zu verleihen.

Vorliegende Erfindung ermöglicht somit die Anwendung von Verbundwerkstoffen als konstruktive Elemente komplexer, beliebig geformter, mechanisch stabiler und tragender Strukturen.

Dies ermöglicht zudem neue und breiter werdende Einsatzgebiete für Verbundwerkstoffe in Bereichen, wie beispielsweise der Bauwirtschaft oder dem Transportwesen. Im weiteren erlaubt vorliegende Erfindung die Nutzung der Vorteile von Verbundwerkstoffen, wie beispielsweise die Schalldämmung oder das geringe Raumgewicht für den Bau grosser und komplexer Strukturen.

## Patentansprüche

1. Verbindung zweier Elemente aus Aluminium oder Aluminiumlegierungen, wobei mindestens das erste Element eine Deckschicht als Teil eines Verbundwerkstoffes, enthaltend einen wärmezersetzbaren Kern und wenigstens eine äussere Deckschicht, darstellt,
dadurch gekennzeichnet, dass
die Verbindung eine Schmelzschweissnaht ist, die wenigstens teilweise zwischen mindestens einer äusseren Deckschicht des ersten Elementes und dem zweiten Element angeordnet ist.

2. Verbindung nach Anspruch 1, dadurch gekennzeichnet, dass das zweite Element ein Profil oder Blech aus Aluminium oder Aluminiumlegierungen darstellt.

3. Verbindung nach Anspruch 1, dadurch gekennzeichnet, dass das zweite Element ein Verbundwerkstoff, enthaltend einen wärmezersetzbaren Kern und wenigstens eine äussere Deckschicht, darstellt und die Verbindung eine Schmelzschweissnaht zwischen mindestens einer äusseren Deckschicht des ersten Elementes und mindestens einer äusseren Deckschicht des zweiten Elementes darstellt.

4. Verbindung nach Anspruch 1, dadurch gekennzeichnet, dass die beiden verbundenen Elemente je einen Teil ein und derselben Deckschicht eines Verbundwerkstoffes darstellen.

5. Verbindung nach Anspruch 1, dadurch gekennzeichnet, dass die Schmelzschweissnaht keinen direkten Kontakt mit dem Kernmaterial aufweist.

6. Verbindung nach Anspruch 5, dadurch gekennzeichnet, dass der Abstand der Schmelzschweissnaht zum Kernmaterial des Verbundwerkstoffes zwischen 0,5 und 5 mm beträgt.

7. Verbindung nach Anspruch 6, dadurch gekennzeichnet, dass die durch diesen Abstand geschaffene Oberfläche des Kernmaterials mit der dadurch hinterschnittenen Deckschicht einen spitzen Winkel zwischen 45 und 60° einschliesst.

8. Verfahren zum Verbinden zweier Elemente aus Aluminium oder Aluminiumlegierungen, wobei mindestens ein Element eine Deckschicht als Teil eines Verbundwerkstoffes, enthaltend einen wärmezersetzbaren Kern und wenigstens eine äussere Deckschicht, darstellt,
dadurch gekennzeichnet, dass
die Verbindung mittels Schmelzschweissen mindestens einer Deckschicht des Verbundwerkstoffes des einen Elementes mit dem anderen Element geschieht.

9. Verfahren nach Anspruch 8, dadurch gekennzeichnet, dass bei Verbundwerkstoffen das Kernmaterial im Bereich der zu verschweissenden Stellen vor dem Schmelzschweissvorgang derart entfernt wird, dass eine Ausnehmung entsteht und ein Abstand der zu verschweissenden Stellen der Deckschicht zum Kernmaterial von 0,5 bis 5 mm resultiert.

10. Verfahren nach Anspruch 9, dadurch gekennzeichnet, dass durch die Ausnehmung im Kernmaterial eine Hinterschneidung der Deckfläche resultiert und die dabei entstehende Oberfläche des Kernmaterials mit der Deckfläche einen spitzen Winkel zwischen 45 und 60° einschliesst.

11. Verfahren nach Anspruch 8, dadurch gekennzeichnet, dass die zu verbindenden Flächen in einem Abstand von 0 bis 3 mm zueinander angeordnet und dann miteinander verschweisst werden.

12. Verfahren nach Anspruch 8, dadurch gekennzeichnet, dass zum mechanisch stabilen Fixieren eines gebogenen Verbundwerkstoffes die Deckschicht vor dem Biegevorgang an der Biegungsinnenseite quer zur Biegerichtung aufgetrennt und nach dem Biegevorgang wieder verschweisst wird.

13. Verfahren nach Anspruch 8, dadurch gekennzeichnet, dass das Schmelzschweissen mittels TIG- oder MIG-Impulsschweissverfahren durchgeführt wird.

14. Verfahren nach Anspruch 8, dadurch gekennzeichnet, dass das Schmelzschweissen mittels Laserschweissverfahren durchgeführt wird.

15. Verfahren nach Anspruch 14, dadurch gekennzeichnet, dass als Laser ein $CO_2$-Laser, zweckmässigerweise mit einer Leistungsstärke zwischen 2 und 15 kW oder ein Nd:YAG-Laser, zweckmässigerweise mit einer Leistungsstärke zwischen 0,5 und 3 kW verwendet wird.

16. Verfahren nach Anspruch 8, dadurch gekennzeichnet, dass das Schmelzschweissen unter einer Schutzgasatmosphäre mit inerten Gasen, zweckmässig mit inerten Gasen enthaltend 0 bis 2 Vol.-% Sauerstoff oder 0 bis 1 Vol.-% Stickstoff durchgeführt wird, wobei als inerte Gase vorzugsweise Edelgase, insbesondere Argon, Helium oder Gemische davon, verwendet werden.

17. Verfahren nach Anspruch 8, dadurch gekennzeichnet, dass beim Schmelzschweissen eine Schweisslegierung in Form eines Zusatzdrahtes zugeführt wird und der Zusatzdraht zur Verminderung der während dem Schweissvorgang zuzuführenden Wärmeenergie induktiv vorgeheizt wird.

18. Verwendung des Verfahrens nach den Ansprüchen 8 bis 17 zur Herstellung komplexer, beliebig geformter, mechanisch stabiler und tragender Strukturen.

Fig. 1

Fig. 2

Fig. 3

Fig. 4

Europäisches
Patentamt

# EUROPÄISCHER RECHERCHENBERICHT

Nummer der Anmeldung

EP 94 81 0502

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 066 009 (ALLUMINIO ITALIA S.P.A.)<br><br>* Anspruch 1; Abbildung 1 *<br>--- | 1,3,4,8,<br>14,18 | B23K20/233<br>B23K33/00 |
| Y | EP-A-0 527 229 (FANUC LTD)<br><br>* Spalte 2, Zeile 1 - Zeile 10 *<br>--- | 1,3,4,8,<br>14,18 | |
| A | DE-A-38 13 860 (GEA CANZLER GMBH & CO KG)<br><br>* Spalte 3, Zeile 37 - Zeile 44;<br>Abbildungen 5-8 *<br>--- | 1,4,5,<br>7-10,14 | |
| A | EP-A-0 506 502 (GIAT INDUSTRIES)<br>--- | | |
| A | DE-A-16 27 608 (SMS SAMESREUTHER MÜLLER SCHUSS GMBH)<br>--- | | |
| A | DE-A-20 35 308 (EGO WERKE AG)<br>--- | | |
| A | DE-C-950 710 (MASCHINENFABRIK AUGSBURG-NÜRNBERG A.G.)<br>----- | | RECHERCHIERTE SACHGEBIETE (Int.Cl.6)<br><br>B23K<br>F16B<br>E04B |

Der vorliegende Recherchenbericht wurde für alle Patentansprüche erstellt

| Recherchenort | Abschlußdatum der Recherche | Prüfer |
|---|---|---|
| DEN HAAG | 19. Dezember 1994 | Rausch, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument

EPO FORM 1503 03.82 (P04C03)